# EUROPEAN PATENT SPECIFICATION

(11) **EP 2 340 651 B1**
(45) Date of publication and mention of the grant of the patent: **18.09.2013**
(21) Application number: 08875156.5
(22) Date of filing: 06.10.2008
(51) Int. Cl.: H04W 4/08

(54) **GROUP MANAGEMENT IN A COMMUNICATION NETWORK**
GRUPPENVERWALTUNG IN EINEM KOMMUNIKATIONSNETZ
GESTION DE GROUPE DANS UN RÉSEAU DE COMMUNICATION

(43) Date of publication of application: 06.07.2011
(73) Proprietor: Telefonaktiebolaget L M Ericsson (PUBL), 164 83 Stockholm (SE)
(72) Inventor: LINDER, Jia, S-125 35 Älvsjö (SE); CAMPESINO ROBLES, Antonio, S-116 61 Stockholm (SE)
(74) Representative: Suckling, Andrew Michael
(86) International application number: PCT/EP2008/063349
(87) International publication number: WO 2010/040380

(56) References cited:
- EP-A- 1 587 332
- WO-A-01/71939
- US-A1- 2001 027 111
- US-A1- 2005 113 123

## Description

### TECHNICAL FIELD

The invention relates to the field of group management in a communication network.

### BACKGROUND

In communication networks, a group refers to a grouping of users or devices. Taking the example of a group of users, an individual user may belong to none, one or a plurality of groups. Groups are used to simplify providing access or services to the individual members of a group. Suppose, for example, a company has twenty employees and two directory structures in a shared network. Five users are allowed to access both directories, the other fifteen are only allowed to access one directory. Without groups, an administrator would have to configure permissions for each individual user. However, permissions may be granted by grouping the users and granting permissions to each group. This very simple example illustrates how grouping users is an efficient way to allow access to services and networks.

Many groups are static, defined by individually selecting group members based on certain criteria. However, dynamic groups can also be used. For example, a dynamic group may include users logged onto a particular network at a particular time. Being logged on to the network is a criterion for group membership, and so the group will obviously change depending on which members of the group are logged on at any one time.

The Open Mobile Alliance (www.openmobilealliance.org) is working on an architectural solution for dynamic group management. As a part of the architecture, a logical node is identified to perform a Uniform Resource Identifier (URI) selection, based on certain conditions or criteria. The URI identifies a group member. The selection function is intended to make a selection of group members based on the criteria (matching conditions) and subsequently provide to a requesting node a collection of group members who fulfils the criteria.

The selection function can access various information sources to make the selection. Information may include both static information (information which does not change frequently) available in databases such as XML Document Management, address books, and user profiles. Information may also include dynamic information that changes more frequently. Examples of dynamic information include information from Presence Servers or Location servers.

URI selection based on criteria/conditions can be performed as a one-time operation (for instance performed only once upon session initiation), or as continuous monitoring of user information (for instance during an ongoing session).

The criteria/condition based URI selection function can be utilized by many services, such as Push to Talk over Cellular (PoC) or Instant Messaging (IM) services. Any session-based group communication can utilize this function for group member management, such as selecting group members at session setup, adding or removing individuals to an active session, sending messages to selected individuals etc., all based on the selection result.
The criteria/condition based URI selection function defined by the OMA provides a list of URIs of group members who fulfil the criteria/conditions each time a selection is made. This information is, in many cases, insufficient for an end-user or service enabler to make a decision on populating a group. For example, information such as "why is Mary in the list and John not in the list" is not provided, or a suggestion of what actions to perform on those circumstances.
Furthermore, when the source information (either static or dynamic) changes, it is inefficient to send a new URI list to the requesting node each time a change occurs. It would be more useful for the requesting node to know which group members are added or removed, when these actions occurred, why the actions occurred, and what actions to take in response to the changes. Examples of the sort of information that can change during a session include profile or preferences changes, changes to a pre-defined list of group members, dynamic presence information changes and so on. EP1587332 describes a method for creating and maintaining dynamic group addresses for PoC group communication sessions, but does not provide any of the information described above. WO 01/71939 also describes communication with a community of users, but makes no mention of providing the sort of information described above.

### SUMMARY

The inventors have realised the limitations of prior art group management notification mechanisms and devised a new method and apparatus.

According to a first aspect of the invention, there is provided a method of performing group management in a communication network. A network node receives from a requesting node a request to monitor a group that contains a plurality of group members. The request also includes at least one criterion to be monitored. The network node determines which group members fulfil the criterion, and sends to the requesting node a notification message including an identity of at least one group member fulfilling the criterion. The notification message also includes further criterion fulfilment information, the further criterion information including an identity of the criterion fulfilled.

As an option, the request is sent in a Session Initiation Protocol SUBSCRIBE message, and the notification message is sent in a Session Initiation Protocol NOTIFY message.

The notification message optionally includes further criterion fulfilment information in an Extensible Markup Language element in the body of a Session Initiation Protocol NOTIFY message.

The notification message is optionally sent prior to a session being established, and includes the identities of all group members fulfilling the criterion. This provides the requesting node with a list of group members fulfilling the criterion at session start-up. Alternatively, the notification message is sent in the event that a group member's status changes after a session has been established. The notification includes the identity of that group member. This allows changes to be dynamically reported to the requesting node, without having to report the status of all group members.

Optional examples of the further criterion fulfilment information include information selected from any of a number of group members in the group fulfilling the criterion, location information used to determine a change in a group member's status, presence information used to determine a change in a group member's status, a reason for a change in a group member's status, a timestamp of when a change to a group member's status occurred, and whether the group member was found using dynamic information or static information.

According to a second aspect of the invention, there is provided a requesting node for use in a communication network. A processor is provided for generating a request message requesting monitoring of a group comprising a plurality of group members. The request includes at least one criterion to be monitored. A transmitter is arranged to send the request message to a network node, and a receiver is arranged to receive a notification message. The notification message includes an identity of at least one group member fulfilling the criterion, and also further criterion fulfilment information, the further criterion information including an identity of the criterion fulfilled.

The processor is optionally arranged to generate a Session Initiation Protocol SUBSCRIBE request message, and the notification message is optionally received as a Session Initiation Protocol NOTIFY message.

According to a third aspect, there is provided a network node for use in a communication network. A receiver is provided for receiving a request from a requesting node to monitor a group comprising a plurality of group members, the request including at least one criterion to be monitored. A processor is used to determine which group members fulfil the criterion. A transmitter is arranged to send to the requesting node a notification message including an identity of at least one group member fulfilling the criterion. The notification message includes further criterion fulfilment information.

The transmitter is optionally arranged to send the notification message prior to a session being established, and includes the identities of all group members fulfilling the criterion. Alternatively, the processor is arranged to initiate the sending of the notification message in the event that a group member's status changes, the notification including the identity of that group member. Optional examples of the further criterion fulfilment criterion includes information selected from any of a number of group members in the group fulfilling the criterion, a reason for a change in a group member's status, a timestamp of when a change to a group member's status occurred, and whether the group member was found using dynamic information or static information.

### BRIEF DESCRIPTION OF THE DRAWINGS

Figure 1 is a signalling diagram illustrating an embodiment of the invention;
Figure 2 illustrates schematically in a block diagram a Service Enabler node according to an embodiment of the invention; and
Figure 3 illustrates schematically in a block diagram a Dynamic Group Enabler node according to an embodiment of the invention.

### DETAILED DESCRIPTION

When a requesting node requests updates to the status of group members, criteria fulfilment related information is sent in the notifications sent to the requestor. If requested, the logical node performing a criteria/condition based URI selection function is able to include elements such as:
- The overall number of group members fulfilling the criteria/conditions;
- Group members found by using static information, for example: pre-defined members in lists, search results from databases (address books, profiles), and the reasons and times of any changes to static information.
- The status of group members who fulfil dynamic criteria/conditions, details on which condition(s) is/are fulfilled (a group member could fulfil several conditions), and the reasons and times of any changes to static information.

In order to provide a requesting node with criteria fulfilment updates, a SIP event package as described in RFC 4575, "A SIP Event Package for Conference State", can be extended. A SIP event package can be used by, for example, a conference notification service. The SIP event package for a conference notification service is predominantly used to inform a set of subscribers about the state of conference participants. Note that even in cases where the application of the invention is not directly related to a conference service, it is possible to use this event package to inform subscribers about the state of another entity based on a set of defined criteria, such as geographical location, presence status or other user or entity related information. A conference scenario is therefore used as an example in the following description, but it will be appreciated that the invention applies equally to any scenario in which the status of an entity is evaluated. A criteria/condition based selection function can be used prior to establishing a conference or to obtain information about which users fulfil the given criteria.

In an embodiment of the invention, criteria to be evaluated are described using an extension of policy described in RFC 4745, "Common Policy: A Document Format for Expressing Privacy Preferences". The common policy defines a set of rules composed of a set of conditions, a set of actions and, in one option, a set of transformations. The conditions specify to whom an action and/or transformation will be applied. This set of rules is sent in the body of an initial SIP SUBSCRIBE request message.

A URI selection function sends notifications of updates depending on the evaluation criteria used, using an extension of the SIP event package for conference state. Updates are sent in the body of SIP NOTIFY requests. The mapping and usage of different XML elements and attributes, are described below:
- <conference-info>: Contains diverse information about the requested evaluation service.
   ○ entity: This attribute contains the group URI, the list URI or an ad-hoc unique URI. This is a SIP URI that a requesting entity must subscribe to, in order to obtain the information about the dynamic criteria.
   ○ state: Indicates whether or not the notification contains the information about all the entities taking part in the conference("full"), only contains information that has changed since the last notification was issued ("partial"), or if the subscription has ceased to exists or the target group of entities has been deleted ("deleted").
- <conference-description>: Gives information about the service group or the resource list, when such a group is pre-defined.
   ○ <display-text>: The display text of the service group or the resource list.
   ○ <subject>, <free-text>. <keywords> can be populated with information as described in RFC4575 when it can be extracted from the service group or resource list.
   ○ <conf-uris>: Contains a set of URIs that identify the evaluated session.
   ○ <service-uris>: Contains a set of URIs that can be used to contact the evaluation service , i.e. the SIP URI to where the ad-hoc evaluation service can be issued.
   ○ <maximum-user-count>: Defines the maximum number of users that the service can handle per session. In the event that this number is exceeded, the service will apply local policies to determine which users the service is applied to. ○ <available-media>: This is not used.
- <host-info>: Used in the same way as in RFC4575
- <conference-state>: Describes the state of the evaluation session:
   ○ <user-count>: The number of the users that are considered for evaluation when the subscribe request is received, independently of whether the user fulfils any criteria or not.
   ○ <active>: Indicate if the evaluation session is active or not.
- <users>/<user>: Describes a user that is part of a target group. The user is monitored to determine whether the user fulfils any of the criteria.
   ○ entity: This attribute contains the URI for the user in the evaluation session. This URI must be unique among all the other participants in the target group.
   ○ state: This attribute indicates whether the element contains whole user information ("full"), only the information that has changed since the previous notification ("partial"), or that the user is no longer to be considered for evaluation.
   ○ <display-text>: This element contains a user-friendly text to display to end-users. It can be extracted from a service group or from a resource list.
   ○ <associated-aors>: This element may contain additional URIs being associated with the user, i.e. TEL URIs or email addresses.
- <user>/<endpoint>: This element defines one of the devices used by the user. Normally the user element will contain only one endpoint element.
   ○ entity: This is the URI associated with this endpoint and must be unique in the user context. In SIP terms, it will be the Contact URI.
   ○ state: This attribute indicates whether the element contains whole endpoint information ("full"), only the information that has changed since the previous notification ("partial"), or this endpoint is no longer considered for evaluation.
   ○ <display-text>: This element contains display text for the endpoint.
   ○ <status>: As in the RFC4575 but only 'connected', 'disconnected' and 'pending' will be used if the user fulfils at least one of the given criteria, or not.
   ○ <referred>, <joining-method>, <joining-info>, <disconnection-method>, <disconnection-info> and <media> elements are not used.
   ○ <call-info> is used in the same way as described in RFC4575
- <sidebar-by-ref> and <sidebar-by-val> are not used.

Additionally, one new element is defined under the <endpoint> element:
- <rule-info>: Contains information about which criteria the user fulfils at the time the notification is issued.

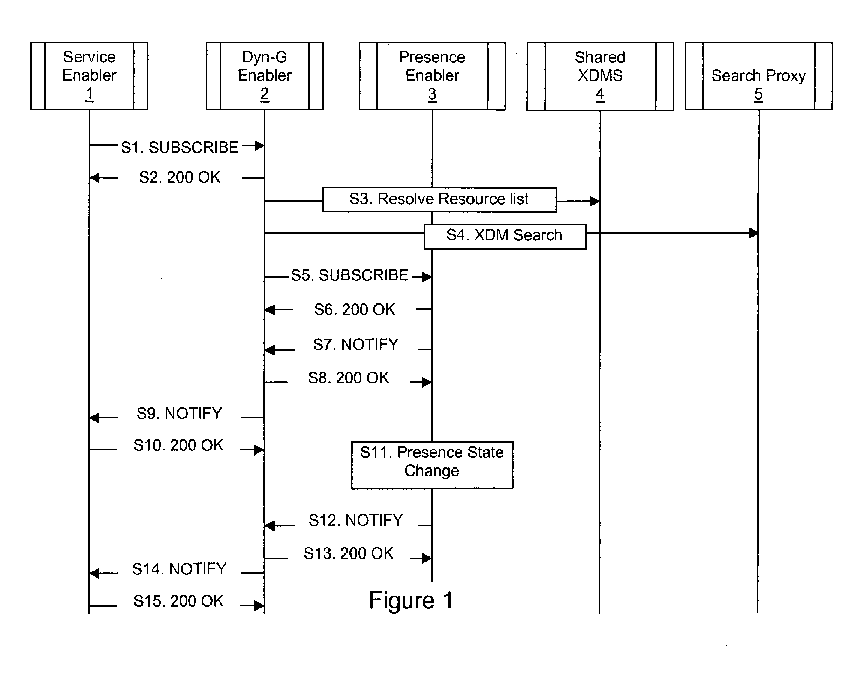

By way of example, to illustrate the invention, Figure 1 is a signalling diagram illustrating an embodiment of the invention. Figure 1 shows a Service Enabler 1, which is the requesting node that requests information about the status of conference participants. A Dynamic Group Enabler 2 (shown as Dyn-G Enabler in Figure 1) performs the function of evaluating criteria and informing the Service Enabler 1 of which users fulfil requested criteria, and changes to which users fulfil requested criteria. A Presence Enabler 3 is also present, which the Dyn-G Enabler 2 subscribes to. A Shared XDMS server 4 is used to provide a resource list to the Dyn-G Enabler 2, and a Search Proxy node 5 is used to perform an XDM search. The Search Proxy node 5 forwards the XDM search query to specific XDM servers in the network that may contain the requested information, and combine all received responses. The Dyn-G Enabler 2 can then the URIs from a resource list obtained from the Shared XDM server 4, and URIs from the results of the XDM search as targets for the evaluation criteria. The following numbering corresponds to the numbering shown in Figure 1:
S1. A SIP SUBSCRIBE request is sent from the Service Enabler 1 to the Dynamic Group Enabler 2. This SUBSCRIBE message is to subscribe to an OMA dynamic group. The group contains a list with an entry for sip:alice@example.com and a XDM search query. This XDM search resolves to sip:bob@example.com. An example of the SUBSCRIBE message is as follows: 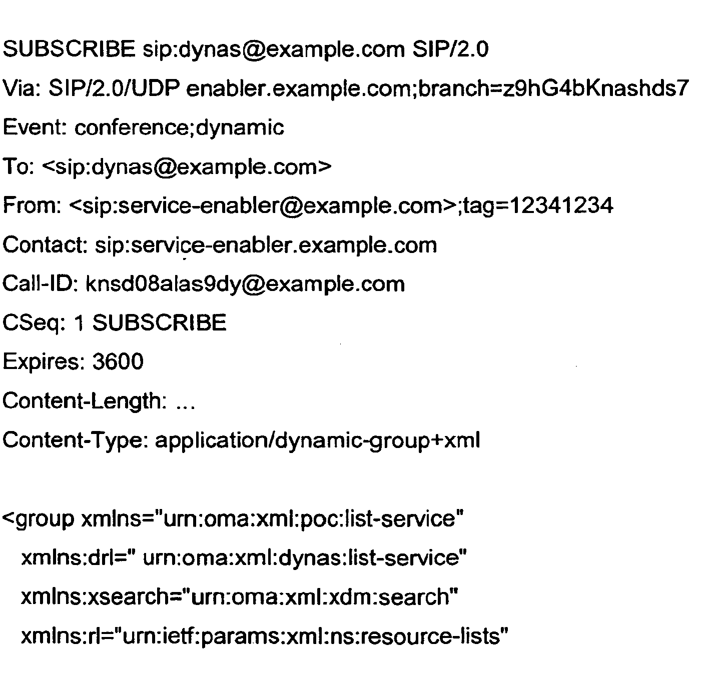 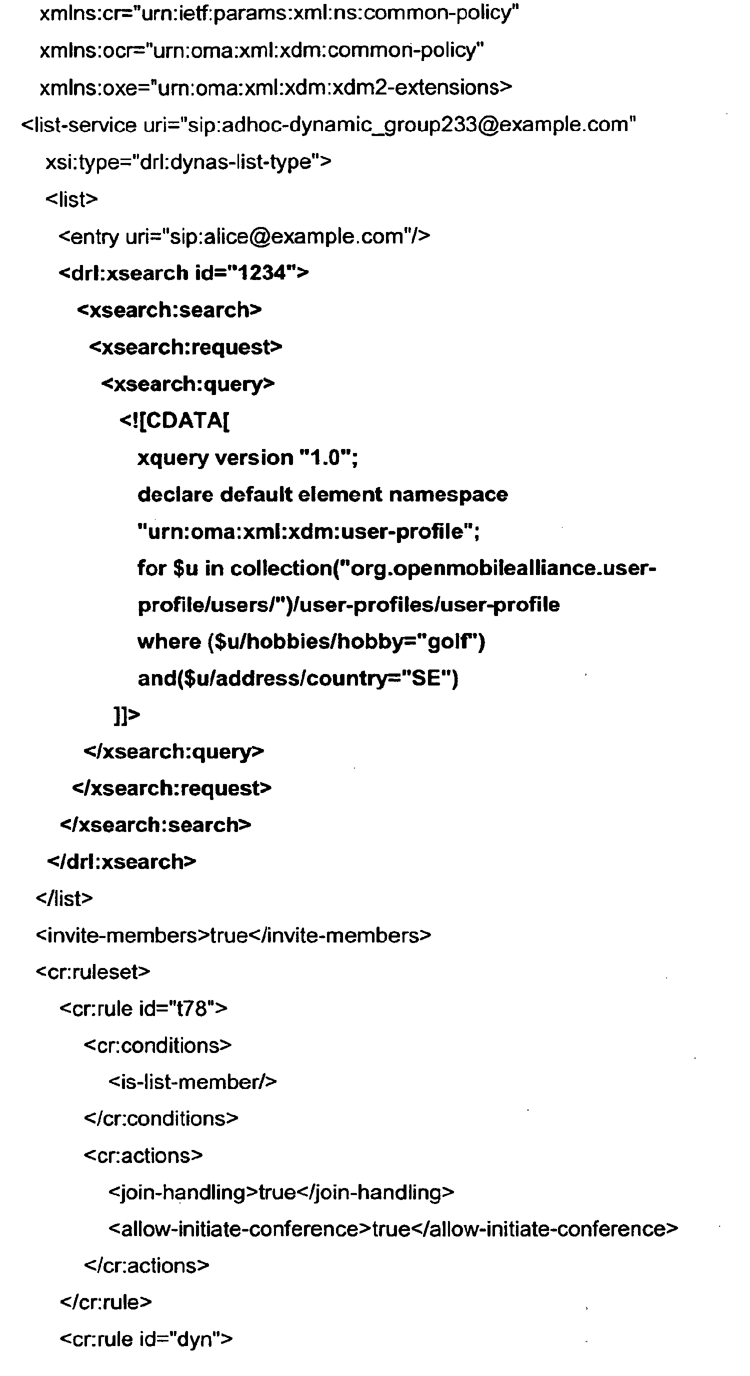 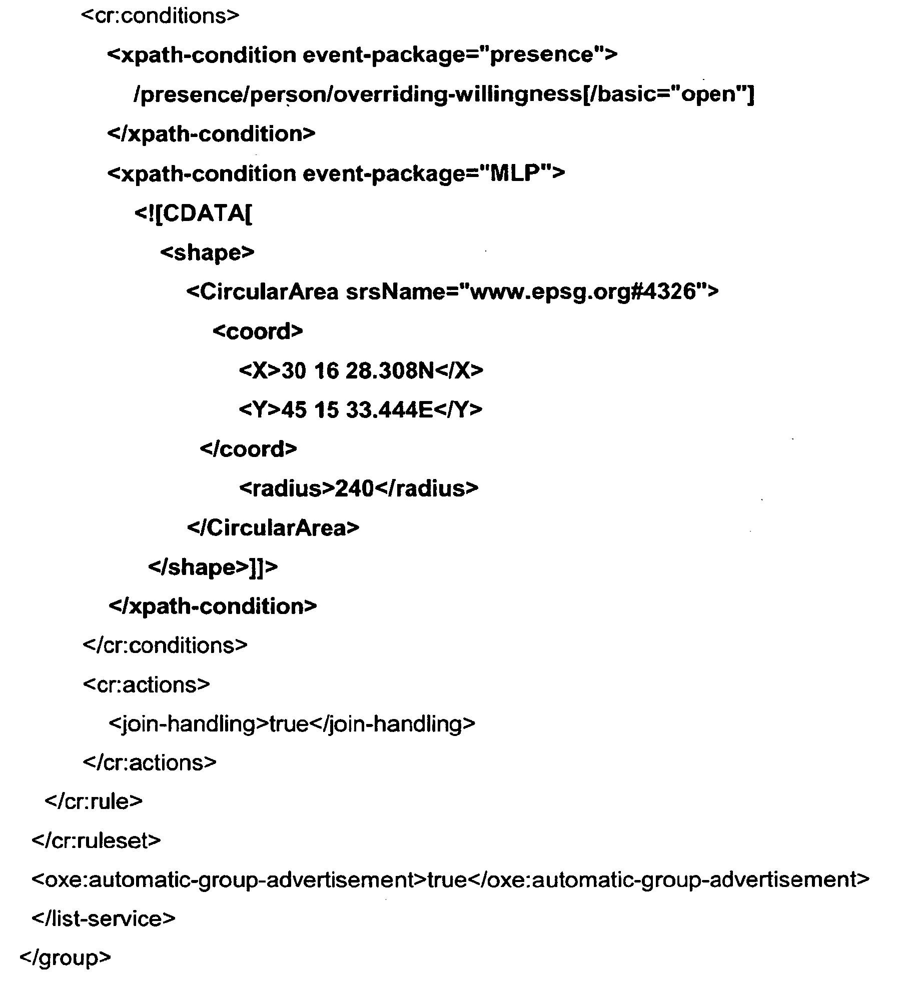
S2. The Dynamic Group Enabler 2 sends a SIP 200 OK response to the Service Enabler 1. An example SIP 200 OK message is as follows:
   SIP/2.0 200 OK
   Via: SIP/2.0/UDP host.example.com;branch=z9hG4bKnashds7
   ;received=192.0.2.1
   To: <sip:dynas@example.com>;tag=abcd1234
   From: <sip:service-enabler@example.com>;tag=12341234
   Call-ID: knsd08alas9dy@example.com
   CSeq: 1 SUBSCRIBE
   Contact: sip:dynas.example.com
   Expires: 3600
   Content-Length: 0
S3. Resolve Resource list: The Dynamic Group Enabler 2 obtains a resource list from the Shared XDMS Server 4.
S4. When the Dynamic Group Enabler analyses the <list-service>/<list> element, it finds a <drl:xsearch> entry. That indicates that an XDM search is required. The Dynamic Group Enabler performs the search using the Proxy search 5 with the query provided in the <drl:xsearch> entry. The search resolves to a single URI: sip:bob@example.com
S5. A SIP SUBSCRIBE request is sent from the Dynamic Group Enabler 2 to the Presence Enabler 3 for each target URI provided by the entrys in the <list-service>/<list> element. In this example, sip:alice@example.com is statically specified and sip:bob@example.com is the result of the XDM Search query.. An example SUBSCRIBE request is as follows:
   SUBSCRIBE sip:alice@example.com SIP/2.0
   Via: SIP/2.0/UDP dynas.example.com;branch=z9hG4bKnashds67wer8
   To: "Alice" <sip:alice@example.com>
   From: <sip:service-enabler@example.com>;tag=12341234
   Contact: sip:dynas.example.com
   Call-ID: knsd56yklas9dy@dynas.example.com
   CSeq: 1 SUBSCRIBE
   Event: presence
   Expires: 3600
S6. A SIP 200 OK response is sent from the Presence Enabler 3 to the Dynamic Group Enabler 2. An example SIP 200 OK is as follows:
   SIP/2.0 200 OK
   Via: SIP/2.0/UDP dynas.example.com;branch=z9hG4bKnashds67wer8
   ;received=192.0.2.1
   To: "Alice" <sip:alice@example.com>;tag=abcd1234
   From: <sip:service-enabler@example.com>;tag=12341234
   Call-ID: knsd56yklas9dy@dynas.example.com
   CSeq: 1 SUBSCRIBE
   Contact: sip:presence.example.com
   Expires: 3600
   Content-Length: 0
S7. A SIP NOTIFY message is sent from the Presence Enabler 3 to the Dynamic Group Enabler 2. The NOTIFY message confirms that the user status has been subscribed to, and includes an initial list of group members meeting the criteria. An example SIP NOTIFY request is as follows:
   NOTIFY sip:dynas.example.com SIP/2.0
   Via: SIP/2.0/UDP presence.example.com;branch=z9hG4bK8sdf2
   To: "Ann" <sip:ann@example.com>;tag=abcd1234
   From: <sip:service-enabler@example.com>;tag=12341234
   Call-ID: knsd56yklas9dy@dynas.example.com
   CSeq: 1 NOTIFY
   Max-Forwards: 70
   Event: presence
   Subscription-State: pending; expires=3599
   Contact: sip:presence.example.com
   Content-Type: application/pidf+xml
   Content-Length: ...
   [PIDF Document]
S8. A SIP 200 OK response is sent from the Dynamic Group Enabler 2 to the Presence Enabler. An example SIP 200 OK response in this example is as follows:
   SIP/2.0 200 OK
   Via: SIP/2.0/UDP presence.example.com;branch=z9hG4bK8sdf2
   ;received=192.0.2.2
   To: <sip:ann@example.com>;tag=abcd1234
   From: <sip:service-enabler@example.com>;tag=12341234
   Call-ID: knsd56yklas9dy@dynas.example.com
   CSeq: 1 NOTIFY
S9. The SIP NOTIFY request is sent from the Dynamic Group Enabler 2 to the Service Enabler 1. An example SIP notify request is as follows:
   NOTIFY sip:bobpc.example.com SIP/2.0
   Via: SIP/2.0/UDP dynas.example.com;branch=z9hG4bK8sdf2
   To: <sip:dynas@example.com>;tag=abcd1234
   From: <sip:service-enabler@example.com>;tag=12341234
   Call-ID: knsd08alas9dy@example.com
   CSeq: 1 NOTIFY
   Max-Forwards: 70
   Event: conference;dynamic
   Subscription-State: active; expires=3599
   Contact: sip:dynas.example.com
   Content-Type: application/conference-info+xml
   Content-Length: ... 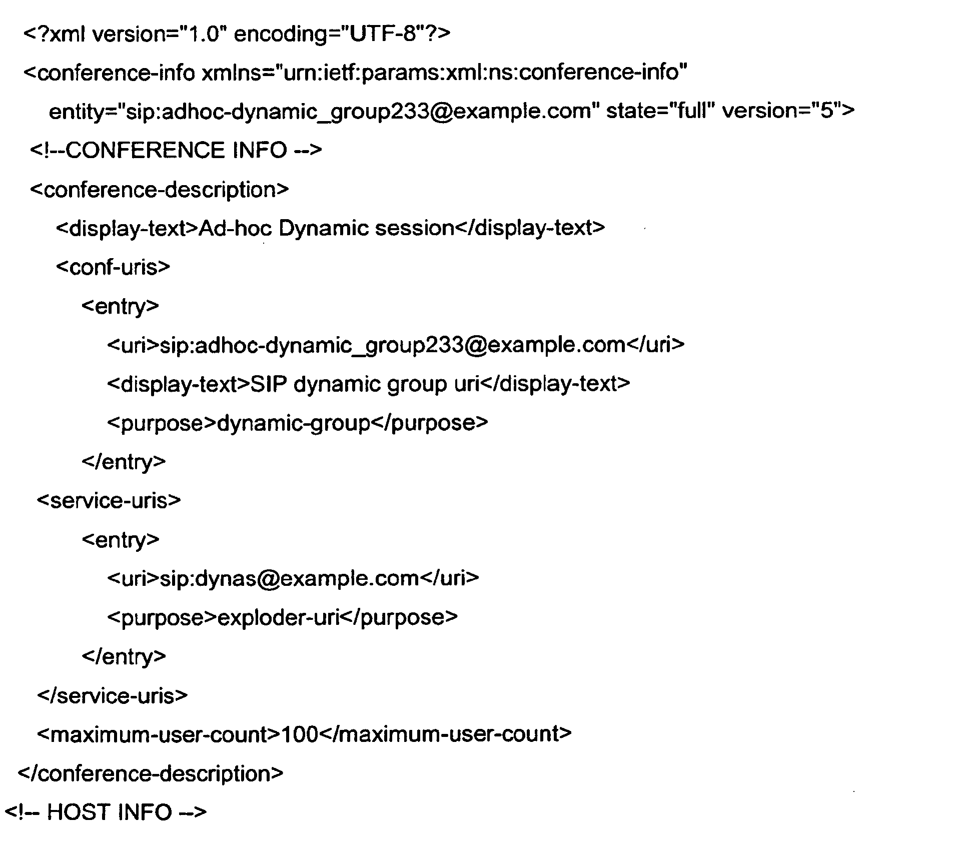 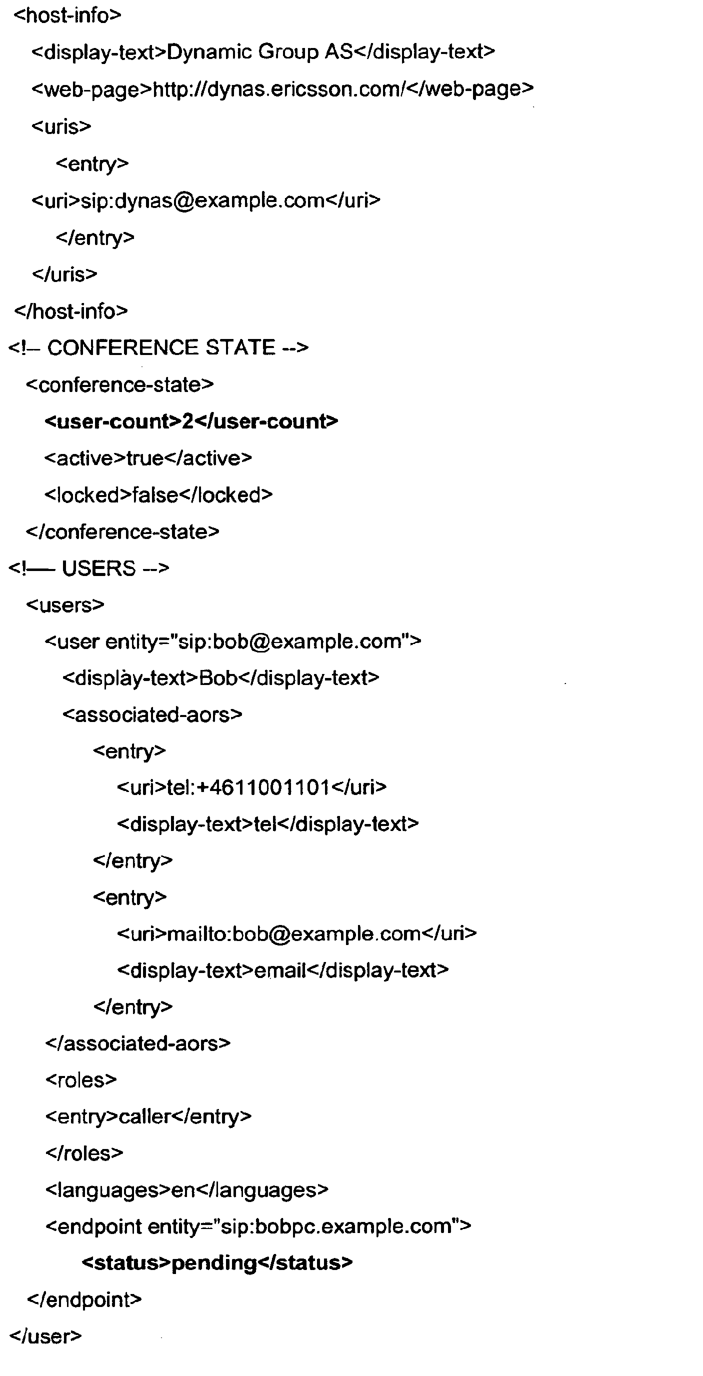 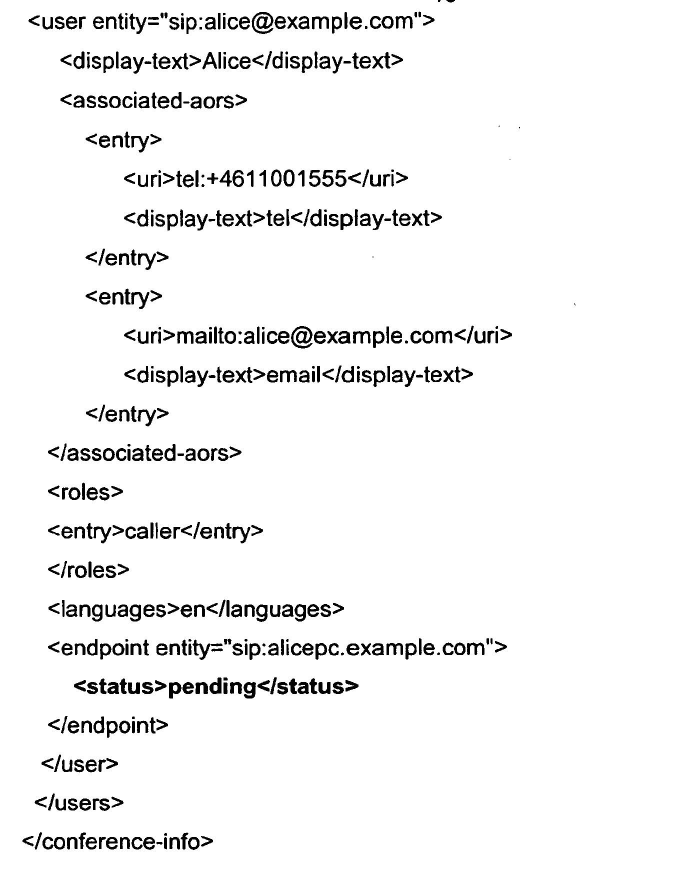
10. A SIP 200 OK response is sent from the Service Enabler 1 to the Dynamic Group Enabler 2. An example SIP 200 OK response is as follows:
   SIP/2.0 200 OK
   Via: SIP/2.0/UDP presence.example.com;branch=z9hG4bK8sdf2
   To: <sip:dynas@example.com>;tag=abcd1234
   From: <sip:service-enabler@example.com>;tag=12341234
   Call-ID: knsd08alas9dy@example.com
   CSeq: 1 NOTIFY
S11. The presence status of the target group member changes (in this case, the target group member is presentity <sip:ann@example.com>).
S12. The change of status triggers the sending of a SIP NOTIFY request from the Presence Enabler 3 to the Dynamic Group Enabler 2. An example SIP NOTIFY request is as follows:
   NOTIFY sip:user@host.example.com SIP/2.0
   Via: SIP/2.0/UDP presence.example.com;branch=z9hG4bK8uer7834
   To: <sip:ann@example.com>;tag=abcd1234
   From: <sip:service-enabler@example.com>;tag=12341234
   Call-ID: knsd56yklas9dy@dynas.example.com
   CSeq: 2 NOTIFY
   Max-Forwards: 70
   Event: presence
   Subscription-State: active; expires=3599
   Contact: sip:pa.example.com
   Content-Type: application/pidf+xml
   Content-Length: ...
   [PIDF Document]
S13. A SIP 200 OK response is sent from the Dynamic Group Enabler 2 the to the Presence Enabler 3. An example SIP 200 OK response is as follows:
   SIP/2.0 200 OK
   Via: SIP/2.0/UDP presence.example.com;branch=z9hG4bK8uer7834
   ;received=192.0.2.2
   To: <sip:ann@example.com>;tag=abcd1234
   From: <sip:service-enabler@example.com>;tag=12341234
   Call-ID: knsd56yklas9dy@dynas.example.com
   CSeq: 2 NOTIFY
S14. A SIP NOTIFY request is sent from the Dynamic Group Enabler 3 to the Service Enabler 1 to notify the Service Enabler of the change of status of the target group member. An example SIP NOTIFY request is as follows:
   NOTIFY sip:bobpc.example.com SIP/2.0
   Via: SIP/2.0/UDP dynas.example.com;branch=z9hG4bK8sdf2
   To: <sip:dynas@example.com>;tag=abcd1234
   From: <sip:service-enabler@example.com>;tag=12341234
   Call-ID: knsd08alas9dy@example.com
   CSeq: 2 NOTIFY
   Max-Forwards: 70
   Event: conference;dynamic
   Subscription-State: active; expires=3599
   Contact: sip:dynas.example.com
   Content-Type: application/conference-info+xml
   Content-Length: ... 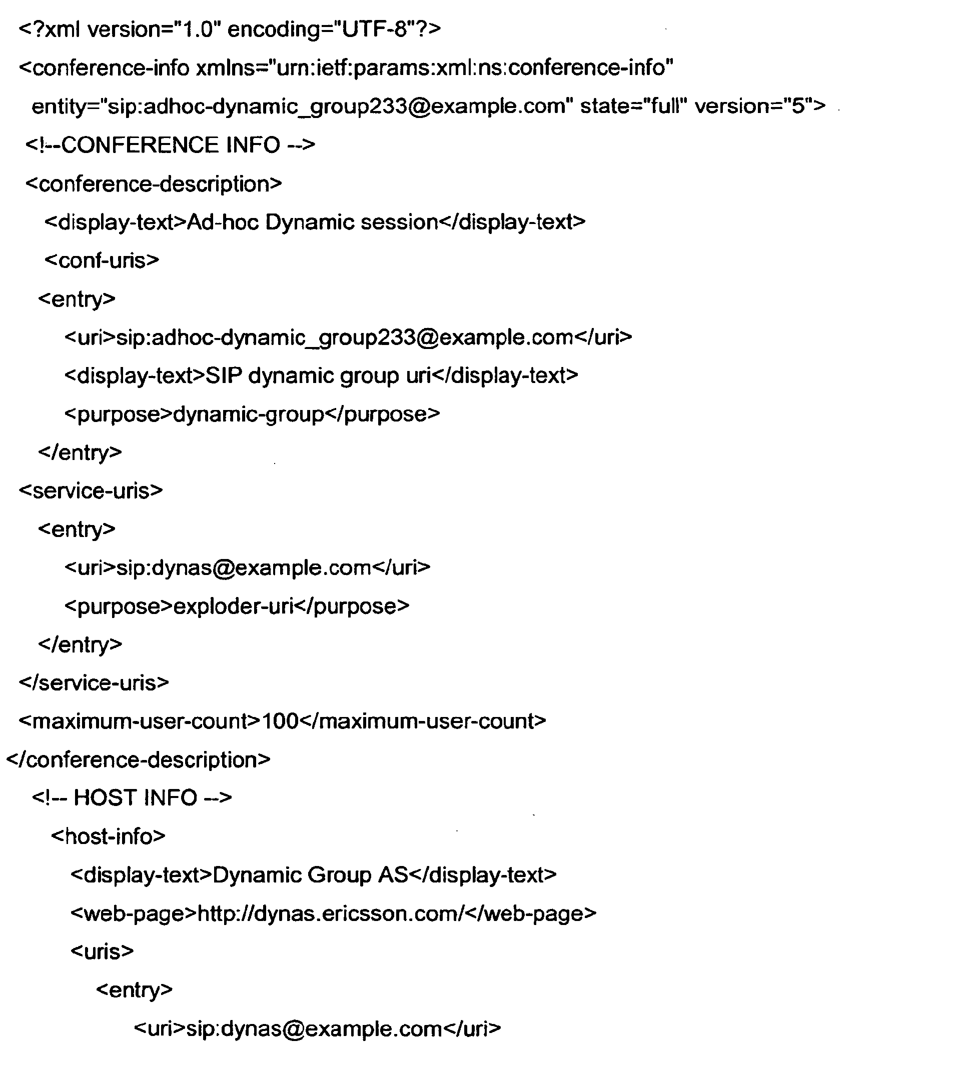 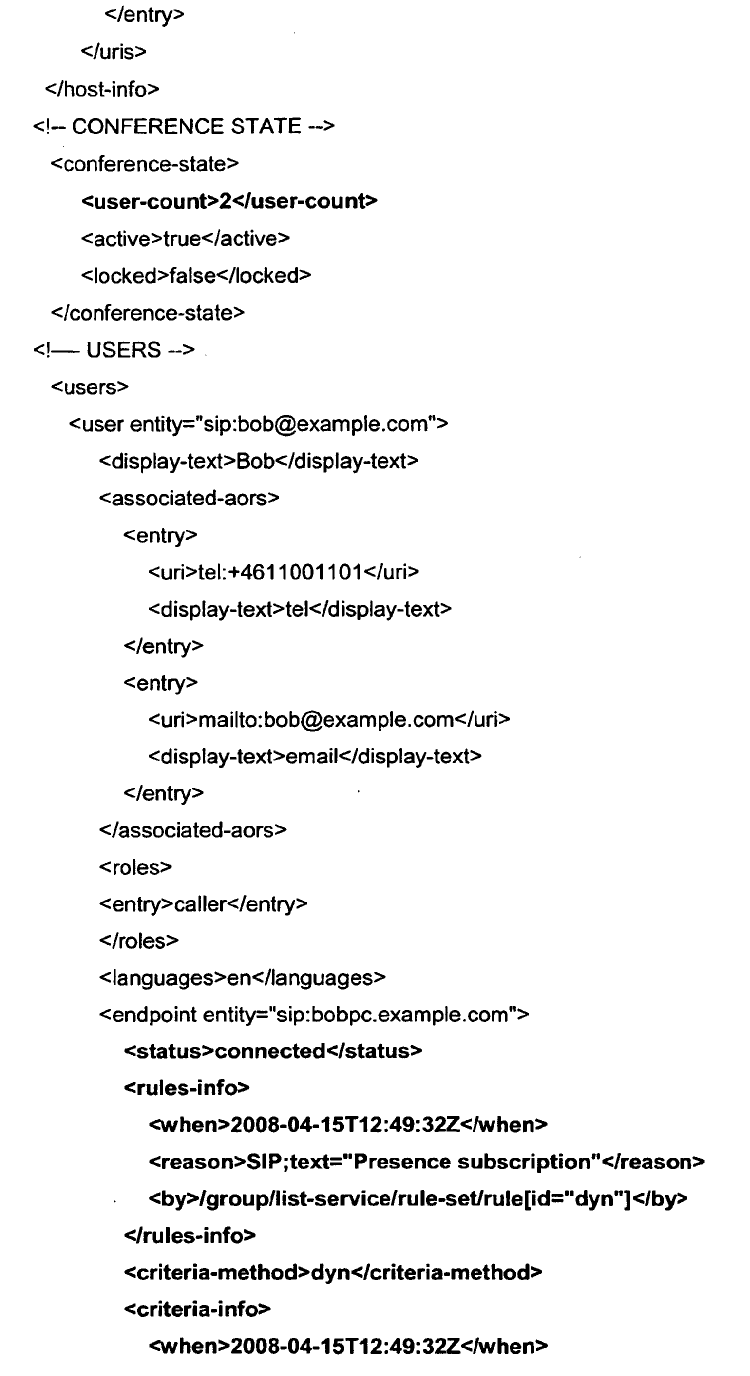 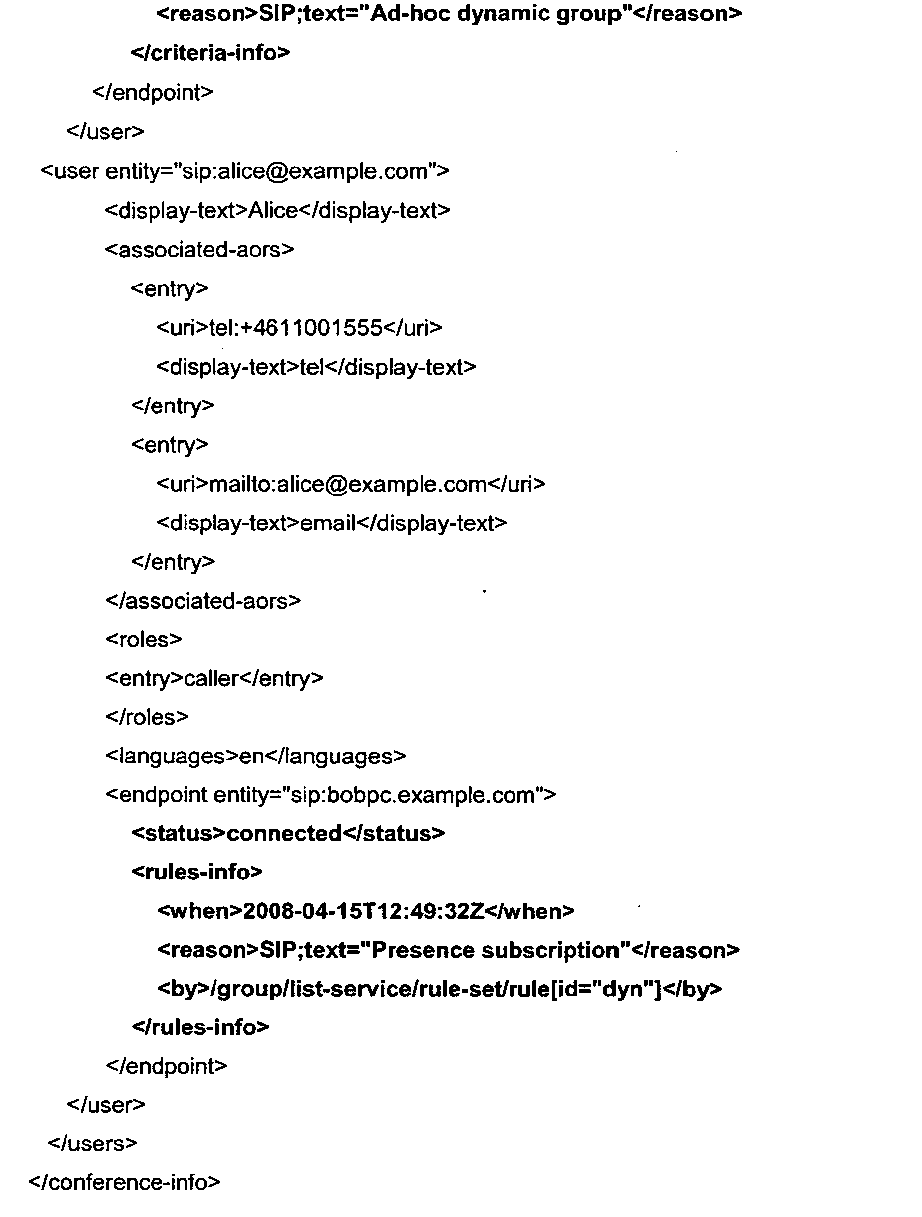
S15. A SIP 200 OK response is sent from the Service Enabler 1 to the Dynamic Group Enabler 2, as follows:
   SIP/2.0 200 OK
   Via: SIP/2.0/UDP presence.example.com; branch=z9hG4bK8sdf2
   To: <sip:dynas@example.com>;tag=abcd1234
   From: <sip:service-enabler@example.com>;tag=12341234
   Call-ID: knsd08alas9dy@example.com
   CSeq: 2 NOTIFY

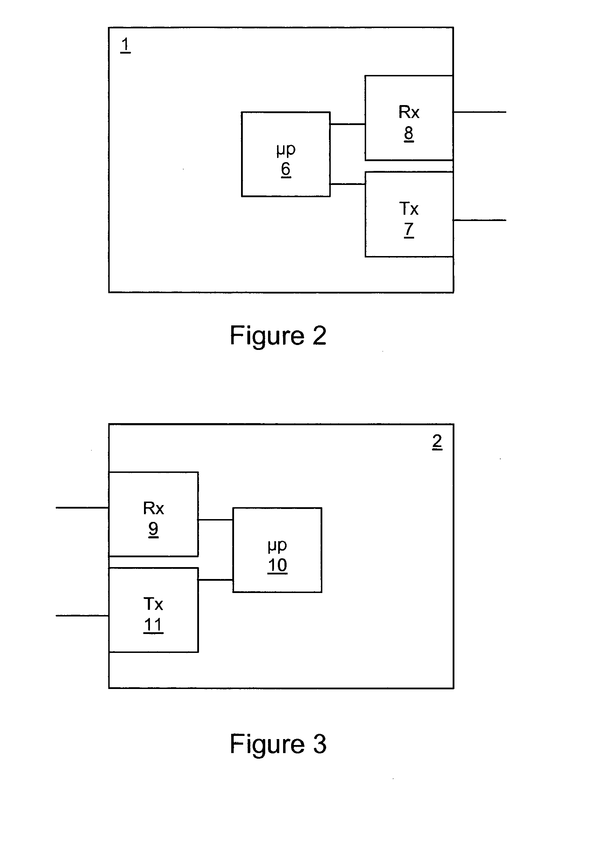

Referring now to Figure 2, the Service Enabler node 1 is provided with a processor 6 for generating the SIP SUBSCRIBE message described in step S1, a transmitter 7 for sending the SIP SUBSCRIBE message to the Dynamic Group Enabler 2, and a receiver 8 for receiving a SIP NOTIFY message described in either S9 or S14 above.

Referring now to Figure 3, the Dynamic Group Enabler 2 is provided with a receiver 9 for receiving the SIP SUBSCRIBE message described in step S1, a processor 10 for determining which group members fulfil a criterion and a transmitter 11 for sending to the Service Enabler 1 a SIP NOTIFY message as described in steps S9 and S14.

The invention makes decision making more flexible for the requester of the condition based URI selection function. If the requester is an end-user (a human), the resulting information is richer and more suitable for flexible decision-making. If the requester is a service enabler (automata), different decision-making models can be used depending on the nature of the service in combination with the additional <rule-info> element. The invention makes the processing at the requester more efficient because the partial notification mechanism informs the requestor what aspect of the target group member's status has changed. The rich information provided in the notifications can be used for other purposes than session management. One example could be to generate statistic reports.

### OMA List Group extension:

The following is an example extension to the OMA Shared Group schema to provide an extended resource list with dynamic entries such as XDM search and SIMPLE Presence search.

```
 <?xml version="1.0" encoding="UTF-8"?>
 <xsd:schema targetNamespace="urn:oma:xml:dynas:list-service"
 elementFormDefault="qualified"
 xmins:tns="urn:oma:xml:dynas:list-service"
 xmlns:xsd="http://www.w3.org/2001/XMLSchema"
 xmins:ls="urn:oma:xml:poc:list-service"
 xmlns:rl="urn:ietf:params:xml:ns:resource-lists"
 xmlns:pref="urn:oma:xml:xdm:search">
 <xsd:import namespace="urn:ietf:params:xml:ns:resource-lists"/>
 <xsd:import namespace="urn:oma:xml:poc:list-service"/>
 <xsd:import namespace="urn:oma:xml:xdm:search"/>
 <xsd:complexType name="dynas-list-type">
 <xsd:complexContent>
   <xsd:extension base="ls:list-type">
      <xsd:sequence>
        <xsd:choice>
         <xsd:element name="xsearch" type="tns:xsearch-type"
                     minOccurs="0" maxOccurs="unbounded"/>
         <xsd:element name="simple-search"
                     type="tns:simple-search-type" minOccurs="0"
                     maxOccurs="unbounded"/>
        <xsd:choice>
      <xsd:sequence>
   </xsd:extension>
 </xsd:complexContent>
 </xsd:complexType>
 <xsd:annotation>
 <xsd:documentation xml:lang="en">
   The XDM search functionality is defined in the OMA XDM Core
   v2.0 specifications. That schema uses the xml type xsearch-
   type defined in the OMA XDM Core v2.0 specifications. The two
   attributes "target" and "domain" has the same meaning that the
   same request uri parameters defined in the MA XDM Core v2.0
   specifications.
 </xsd:documentation>
 </xsd:annotation>
 <xsd:complexType name="xsearch-type">
 <xsd:sequence>
   <xsd:element name="search" type="pref:SearchType"/>
 </xsd:sequence>
 <xsd:attribute name="target" type="xsd:string"/>
 <xsd:attribute name="domain" type="xsd:string"/>
 </xsd:complexType>
 xsd:annotation>
 <xsd:documentation xml:lang="en">
  The PAG search functionality is under study in OMA. We have
  chosen to define the element in a very similar way to the XDM
  search.
  </xsd:documentation>
  </xsd:annotation>
  <xsd:complexType name="simple-search-type"></xsd:complexType>
  </xsd:schema>
```

### Common-policy extension

The following describes an example extension made to the common-policy schema in order to provide additional SIP event package based dynamic conditions for presence and for geo-priv location based information. The <dynamic-condition> element defines a set of criteria and may contain:
- <xpath-condition>: Describes a condition based on an XPath expression that will be applied to the body of the NOTIFY request received for the subscription issued to the given event package. The condition is fulfilled if the XPath expression does not return an empty sequence.
- <location-condition>: Describes a geographical shape. The condition is fulfilled when the geographical shaped obtained from the location node overlaps with the one provided by this condition.

```
 <?xml version="1.0" encoding="UTF-8"?>
 <xsd:schema targetNamespace="urn:oma:xml:dynas:common-policy"
 elementFormDefault="qualified"
 xmlns:tns="urn:oma:xml:dynas:common-policy"
 xmlns:ocp="urn:oma:xml:xdm:common-policy"
 xmlns:xsd="http://www.w3.org/2001/XMLSchema"
 xmlns:cp="urn:ietf:params:xml:ns:common-policy"
 xmlns:gs="urn:ietf:params:xmi:ns:pidf:geopriv10:geoShape">
 <xsd:import namespace="urn:oma:xml:xdm:common-policy"/>
 <xsd:import namespace="urn:ietf:params:xml:ns:pidf:geopriv10:geoShape">
 <xsd:complexType name="dynamic-condition-type">
 <xsd:sequence maxOccurs="unbounded" minOccurs="1">
  <xsd:choice>
    <xsd:element name="xpath-condition">
      <xsd:complexType>
        <xsd:simpleContent>
           <xsd:extension base="xsd:string">
             <xsd:annotation>
               <xsd:documentation xml:lang="en">
                  The xpath-condition type specify an attribute
                  "event-package" that specifies the event package
                  to use as criteria. The content of the element is
                  a restricted XPATH expression as defined in
                  chapter 5 in the RFC 4661.
               </xsd:documentation>
             </xsd:annotation>
             <xsd:attribute name="event-package"
               type="xsd:string">
             </xsd:attribute>
           </xsd:extension>
        </xsd:simpleContent>
      </xsd:complexType>
    </xsd:element>
       <xsd:element name="location-condition">
          <xsd:complexType>
             <xsd:sequence maxOccurs="1" minOccurs="1">
                <xsd:choice maxOccurs="1" minOccurs="1">
                     <xsd:element ref="gs:ArcBand"/>
                     <xsd:element ref="gs:Circle"/>
                     <xsd:element ref="gs:Ellipse"/>
                     <xsd:element ref="gs:Ellipsoid"/>
                     <xsd:element ref="gs:Prism"/>
                     <xsd:element ref="gs:Sphere"/>
                </xsd:choice>
             </xsd:sequence>
          </xsd:complexType>
       </xsd:element>
    </xsd:choice>
 </xsd:sequence>
 </xsd:complexType>
 <xsd:element name="dynamic-condition" type="tns:dynamic-condition-
 type"/>
 </xsd:schema>
```

### Conference Package extension:

The following provides an example extension to the conference package. The extension provides a new element <rule-info> that contains information about which dynamic rule has been matched for each specific user.

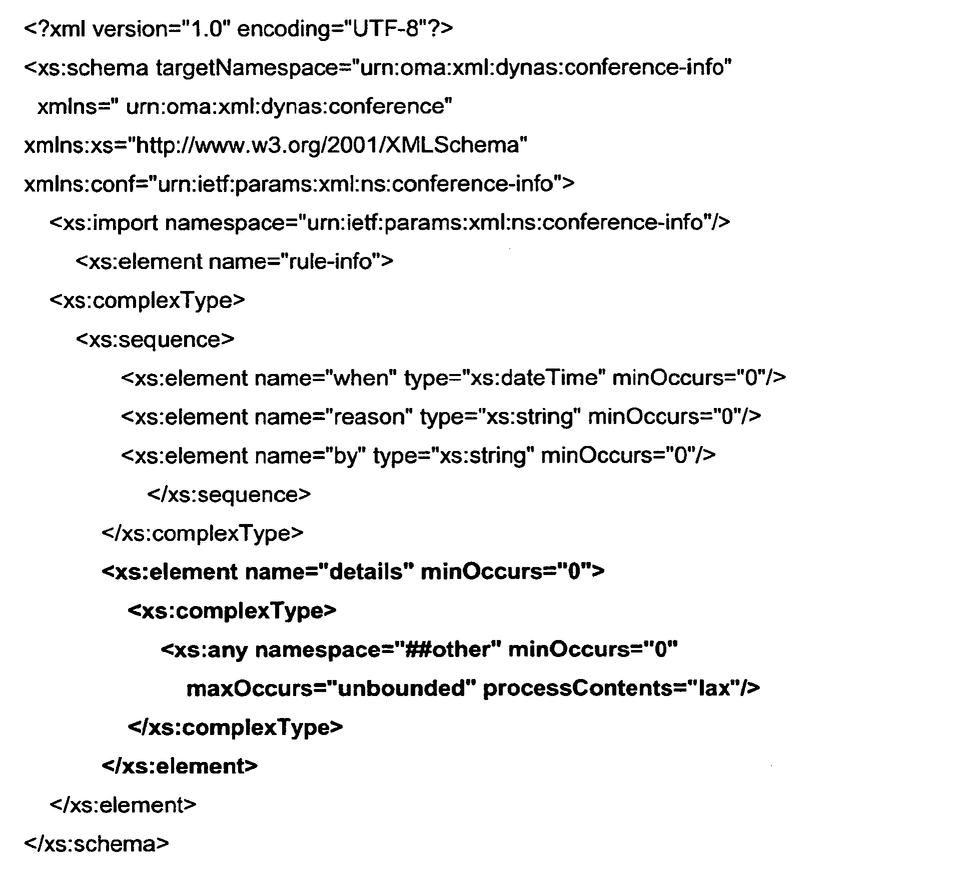

The following abbreviations have been used:
- IM: Instant Messaging
- PAG: Presence and Availability working group
- PoC: Push To Talk over Cellular
- URI: Uniform Resource Identifiers
- Dyn-G: Dynamic Group
- geo-priv: Geographic Location/Privacy
- XPath: XML Path Language
- SIMPLE: SIP for Instant Messaging and Presence Leveraging Extensions

It will be appreciated by the person of skill in the art that various modifications may be made to the above-described embodiments without departing from the scope of the present invention as defined in the appended claims.

## Claims

1. A method of performing group management in a communication network, the method comprising:
at a network node (2), receiving (S1) a request from a requesting node (1) to monitor a group comprising a plurality of group members, the request including at least one criterion to be monitored;
determining which group members fulfil the criterion;
the method **characterized by** sending (S9) to the requesting node (1) a notification message including an identity of at least one group member fulfilling the criterion, the notification message including further criterion fulfilment information, the further criterion information including an identity of the criterion fulfilled.

2. The method according to claim 1, wherein the request from the requesting node (1) is sent in a Session Initiation Protocol SUBSCRIBE message, and the notification message is sent in a Session Initiation Protocol NOTIFY message.

3. The method according to claim 1 or 2, wherein the notification message includes further criterion fulfilment information in an Extensible Markup Language element in the body of a Session Initiation Protocol NOTIFY message.

4. The method according to any one of claims 1, 2 or 3, wherein the notification message is sent prior to a session being established, and includes the identities of all group members fulfilling the criterion.

5. The method according to any one of claims 1, 2 or 3, wherein the notification message is sent in the event that a group member's status changes, the notification including the identity of that group member.

6. The method according to any one of claims 1 to 5, wherein the further criterion fulfilment information includes information selected from any of:
the location information used to determine a change in a group member's status;
the presence information used to determine a change in a group member's status;
a number of group members in the group fulfilling the criterion;
a reason for a change in a group member's status;
a timestamp of when a change to a group member's status occurred; and
whether the group member was found using dynamic information or static information.

7. A requesting node (1) for use in a communication network, the requesting node comprising:
a processor (6) for generating a request message requesting monitoring of a group comprising a plurality of group members, the request including at least one criterion to be monitored;
a transmitter (7) for sending the request message to a network node (2);
the requesting node **characterized by** a receiver (1) for receiving a notification message, the notification message including an identity of at least one group member fulfilling the criterion, the notification message including further criterion fulfilment information, the further criterion information including an identity of the criterion fulfilled.

8. The requesting node according to claim 7, wherein the processor is arranged to generate a Session Initiation Protocol SUBSCRIBE request message, and the notification message is received as a Session Initiation Protocol NOTIFY message.

9. A network node (2) for use in a communication network, the network node **characterized by**:
a receiver (9) for receiving a request from a requesting node (1) to monitor a group comprising a plurality of group members, the request including at least one criterion to be monitored;
a processor (10) for determining which group members fulfil the criterion;
a transmitter (11) for sending to the requesting node a notification message including an identity of at least one group member fulfilling the criterion, the notification message including further criterion fulfilment information, the further criterion information including an identity of the criterion fulfilled.

10. The network node (2) according to claim 9, wherein the transmitter (11) is arranged to send the notification message prior to a session being established, and includes the identities of all group members fulfilling the criterion.

11. The network node (2) according to claim 9 or 10, wherein the processor (10) is arranged to initiate the sending of the notification message in the event that a group member's status changes, the notification including the identity of that group member.

12. The network node (2) according to claim 9, 10 or 11, wherein the further criterion fulfilment information includes information selected from any of:
a number of group members in the group fulfilling the criterion;
a reason for a change in a group member's status;
a timestamp of when a change to a group member's status occurred; and
whether the group member was found using dynamic information or static information.

## Patentansprüche

1. Verfahren zum Ausführen von Gruppenmanagement in einem Kommunikationsnetz, wobei das Verfahren umfasst:
an einem Netzknoten (2) von einem Anforderungsknoten (1) eine Anforderung empfangen (S1), eine Gruppe zu überwachen, die eine Vielzahl von Crruppenmitgliedern umfasst, wobei die Anforderung mindestens ein zu überwachendes Kriterium einschließt;
Bestimmen, welche Gruppenmitglieder das Kriterium erfüllen;
wobei das Verfahren **dadurch gekennzeichnet ist, dass** an den Anforderungsknoten (1) eine Meldenachricht gesendet wird (S9), die eine Identität von mindestens einem das Kriterium erfüllenden Gruppenmitglied einschließt, wobei die Meldenachricht außerdem weitere Kriteriumserfüllungsinformation einschließt, wobei die weitere Kriteriumsinformation eine Identität des erfüllten Kriteriums einschließt.

2. Verfahren nach Anspruch 1, worin die Anforderung vom Anforderungsknoten (1) in einer SIP(Session Initiation Protocol)-SUBSCRIBE-Nachricht gesendet wird und die Meldenachricht in einer SIP-NOTIFY-Nachricht gesendet wird.

3. Verfahren nach Anspruch 1 oder 2, worin die Meldenachricht außerdem weitere Kriteriumserfüllungsinformation in einem XML-Element im Körper einer SIP-NOTIFY-Nachricht einschließt.

4. Verfahren nach einem der Ansprüche 1, 2 oder 3, worin die Meldenachricht gesendet wird, bevor eine Sitzung aufgebaut wird, und die Identitäten aller das Kriterium erfüllenden Gruppenmitglieder einschließt.

5. Verfahren nach einem der Ansprüche 1, 2 oder 3, worin die Meldenachricht in dem Falle gesendet wird, dass sich der Status eines Gruppenmitglieds ändert, wobei die Meldung die Identität dieses Gruppenmitglieds einschließt.

6. Verfahren nach einem der Ansprüche 1 bis 5, worin die weitere Kriteriumserfüllungsinformation aus den Folgenden ausgewählte Information einschließt:
die Positionsinformation, die verwendet wird, um eine Änderung im Status eines Gruppenmitglieds zu bestimmen;
die Anwesenheitsinformation, die verwendet wird, um eine Änderung im Status eines Gruppenmitglieds zu bestimmen;
eine Anzahl von das Kriterium erfüllenden Crruppenmitgliedern in der Gruppe;
einen Grund für eine Änderung im Status eines Gruppenmitglieds;
einen Zeitstempel für den Zeitpunkt, zu dem eine Änderung im Status eines Gruppenmitglieds stattfand; und
ob festgestellt wurde, dass das Gruppenmitglied dynamische Information oder statische Information verwendet hat.

7. Anforderungsknoten (1) zur Verwendung in einem Kommunikationsnetz, wobei der Anforderungsknoten umfasst:
einen Prozessor (6) zum Erzeugen einer Anforderungsnachricht, die das Überwachen einer eine Vielzahl von Crruppenmitgliedern umfassenden Gruppe anfordert, wobei die Anforderung mindesten ein zu überwachendes Kriterium einschließt;
einen Sender (7) zum Senden der Anforderungsnachricht an einen Netzknoten (2);
wobei der Anforderungsknoten durch einen Empfänger (1) zum Empfangen einer Meldenachricht gekennzeichnet ist, wobei die Meldenachricht eine Identität von mindestens einem das Kriterium erfüllenden Gruppenmitglied einschließt, die Meldenachricht weitere Kriteriumserfüllungsinformation einschließt und die weitere Kriteriumsinformation eine Identität des erfüllten Kriteriums einschließt.

8. Anforderungsknoten nach Anspruch 7, worin der Prozessor dazu angeordnet ist, eine SIP-SUBSCRIBE-Nachricht zu erzeugen und die Meldenachricht als eine SIP-NOTIFY-Nachricht empfangen wird.

9. Netzknoten (2) zur Verwendung in einem Kommunikationsnetz, wobei der Netzknoten **gekennzeichnet ist durch**:
einen Empfänger (9) zum Empfangen einer Anforderung von einem Anforderungsknoten (1), eine Gruppe zu überwachen, die eine Vielzahl von Crruppenmitgliedern umfasst, wobei die Anforderung mindestens ein zu überwachendes Kriterium einschließt;
einen Prozessor (10) zum Bestimmen, welche Gruppenmitglieder das Kriterium erfüllen;
einen Sender (11), um an den Anforderungsknoten eine Meldenachricht zu senden, die eine Identität von mindestens einem das Kriterium erfüllenden Gruppenmitglied einschließt, wobei die Meldenachricht weitere Kriteriumserfüllungsinformation einschließt und die weitere Kriteriumsinformation eine Identität des erfüllten Kriteriums einschließt.

10. Netzknoten (2) nach Anspruch 9, worin der Sender (11) dazu angeordnet ist, die Meldenachricht zu senden, bevor eine Sitzung aufgebaut wird, und die Identitäten aller das Kriterium erfüllenden Crruppenmitgliedern einschließt.

11. Netzknoten (2) nach Anspruch 9 oder 10, worin der Prozessor (10) dazu angeordnet ist, das Senden der Meldenachricht in dem Falle zu initiieren, dass sich der Status eines Gruppenmitglieds ändert, wobei die Meldung die Identität dieses Gruppenmitglieds einschließt.

12. Netzknoten (2) nach Anspruch 9, 10 oder 11, worin die weitere Kriteriumserfüllungsinformation aus den Folgenden ausgewählte Information einschließt:
eine Anzahl von Crruppenmitgliedern in der das Kriterium erfüllenden Gruppe;
einen Grund für eine Änderung im Status eines Gruppenmitglieds;
einen Zeitstempel für den Zeitpunkt, zu dem eine Änderung im Status eines Gruppenmitglieds stattfand; und
ob festgestellt wurde, dass das Gruppenmitglied dynamische Information oder statische Information verwendet hat.

## Revendications

1. Procédé de mise en oeuvre de gestion de groupe dans un réseau de communication, le procédé consistant à :
au niveau d'un noeud de réseau (2), recevoir (S1) une demande provenant d'un noeud demandeur (1), visant à surveiller un groupe comprenant une pluralité de membres de groupe, la demande incluant au moins un critère à surveiller ;
déterminer quels membres de groupe respectent le critère ;
le procédé étant **caractérisé par** l'envoi (S9), au noeud demandeur (1), d'un message de notification incluant une identité d'au moins un membre de groupe respectant le critère, le message de notification incluant des informations supplémentaires de respect de critère, les informations supplémentaires de respect de critère comprenant une identité du critère respecté.

2. Procédé selon la revendication 1, dans lequel la demande provenant du noeud demandeur (1) est envoyée dans un message d'abonnement « SUBSCRIBE » de protocole d'ouverture de session, et le message de notification est envoyé dans un message de notification « NOTIFY » de protocole d'ouverture de session.

3. Procédé selon la revendication 1 ou 2, dans lequel le message de notification comprend des informations supplémentaires de respect de critère dans un élément de langage de balisage extensible dans le corps d'un message de notification « NOTIFY » de protocole d'ouverture de session.

4. Procédé selon l'une quelconque des revendications 1, 2 ou 3, dans lequel le message de notification est envoyé préalablement à l'établissement d'une session, et inclut les identités de tous les membres de groupe respectant le critère.

5. Procédé selon l'une quelconque des revendications 1, 2 ou 3, dans lequel le message de notification est envoyé en cas de modification du statut d'un membre de groupe, la notification incluant l'identité de ce membre de groupe.

6. Procédé selon l'une quelconque des revendications 1 à 5, dans lequel les informations supplémentaires de respect de critère incluent des informations sélectionnées à partir de l'une quelconque des informations ci-dessous :
les informations de localisation utilisées en vue de déterminer une modification au niveau du statut d'un membre de groupe ;
les informations de présence utilisées en vue de déterminer une modification au niveau du statut d'un membre de groupe ;
un nombre de membres de groupe, au sein du groupe, respectant le critère,
le motif d'une modification du statut d'un membre de groupe ;
une estampille temporelle indiquant le moment où une modification du statut d'un membre de groupe a été rencontrée; et
des informations indiquant si le membre de groupe a été retrouvé à l'aide d'informations dynamiques ou d'informations statiques.

7. Noeud demandeur (1) à utiliser dans un réseau de communication, le noeud demandeur comprenant :
un processeur (6) destiné à générer un message de demande invitant à la surveillance d'un groupe comprenant une pluralité de membres de groupe, la demande incluant au moins un critère à surveiller ;
un émetteur (7) destiné à envoyer le message de demande à un noeud de réseau (2) ;
le noeud demandeur étant **caractérisé par** un récepteur (1) destiné à recevoir un message de notification, le message de notification incluant une identité d'au moins un membre de groupe respectant le critère, le message de notification incluant des informations supplémentaires de respect de critère, les informations supplémentaires de respect de critère comprenant une identité du critère respecté.

8. Noeud demandeur selon la revendication 7, dans lequel le processeur est agencé de manière à générer un message de demande d'abonnement « SUBSCRIBE » de protocole d'ouverture de session, et le message de notification est reçu sous la forme d'un message de notification « NOTIFY » de protocole d'ouverture de session.

9. Noeud de réseau (2) à utiliser dans un réseau de communication, le noeud de réseau étant **caractérisé par** :
un récepteur (9) destiné à recevoir une demande en provenance d'un noeud demandeur (1), visant à surveiller un groupe comprenant une pluralité de membres de groupe, la demande comprenant au moins un critère à surveiller ;
un processeur (10) destiné à déterminer quels membres de groupe respectent le critère ;
un émetteur (11) destiné à envoyer au noeud demandeur un message de notification incluant une identité d'au moins un membre de groupe respectant le critère, le message de notification incluant des informations supplémentaires de respect de critère, les informations supplémentaires de respect de critère incluant une identité du critère respecté.

10. Noeud de réseau (2) selon la revendication 9, dans lequel l'émetteur (11) est agencé de manière à envoyer le message de notification préalablement à l'établissement d'une session, et inclut les identités de tous les membres de groupe respectant le critère.

11. Noeud de réseau (2) selon la revendication 9 ou 10, dans lequel le processeur (10) est agencé de manière à initier l'envoi du message de notification en cas de modification du statut d'un membre de groupe, la notification incluant l'identité de ce membre de groupe.

12. Noeud de réseau (2) selon la revendication 9, 10 ou 11, dans lequel les informations supplémentaires de respect de critère incluent des informations sélectionnées à partir de l'une quelconque des informations ci-dessous :
un nombre de membres de groupe, au sein du groupe, respectant le critère ;
le motif d'une modification du statut d'un membre de groupe ;
une estampille temporelle indiquant le moment où une modification du statut d'un membre de groupe a été rencontrée ; et
des informations indiquant si le membre de groupe a été retrouvé à l'aide d'informations dynamiques ou d'informations statiques.
